# EUROPEAN PATENT APPLICATION

(11) **EP 4 553 598 A1**
(43) Date of publication of application: **14.05.2025**
(21) Application number: 24208466.3
(22) Date of filing: 23.10.2024
(51) Int. Cl.: G05B 23/02

(54) **ARTIFICIAL INTELLIGENCE MODEL TO ANALYZE PROCESS ALARMS AND GENERATE CORRESPONDING RATIONALIZATION ACTIONS**

(30) Priority: 10.11.2023 US 202363597759 P; 15.03.2024 US 202418606797
(71) Applicant: Schneider Electric Systems USA, Inc., Foxborough, MA 02035 (US)
(72) Inventor: MOHAMED, Abdalla Noureldin Khalil, 34258 Dhahran (SA); ALMAZ, Mohamed, 34464 Dhahran (SA); ELBARBIR, Shawky Adel Ismaeel, 34236 Qurtoba Al Khobar (SA)
(74) Representative: Friese Goeden Patentanwälte PartGmbB

(57) **Abstract**

Rationalizing an alarm system (10) within an industrial plant (111), includes an alarm system computer (106) in communication with one or more alarm system databases (102). The alarm system computer (106) is configured to execute a machine-learned model (103) to analyze at least one of alarms (101) data and process data received from the alarm system databases (102), to output, a current state of the alarm system (10) within the industrial plant (111). A predetermined alarm system philosophy (104) for the plant is provided as input, and the machine-learned model (103) identifies and executes one or more rationalizing actions for the alarm system (10) based at least on the current state and the predetermined alarm system philosophy (104) to output a rationalized future state of the alarm system (10). At least one of the one or more rationalizing actions comprises modifying an alarm priority within the alarm system (10) based at least on an urgency multiplier and a severity score or consequence value.

## Description

### CROSS-REFERENCE TO RELATED APPLICATION

This application claims the benefit of U.S. Provisional Patent Application Serial. No. 63/597,759, filed on November 10, 2023, and U.S. Nonprovisional Patent Application Serial. No. 18/606,797, filed on March 15, 2024.

### FIELD

The present disclosure generally relates to systems and methods for rationalizing alarm systems within an industrial plant.

### BACKGROUND

Alarm systems are used within industrial plants to notify plant operators regarding the state of operating conditions within industrial plants. Furthermore, alarm systems are used to signal plant operators when process intervention is required within the industrial plant, to correct or prevent abnormal or unsafe operating conditions.

Plant personnel may perform alarm rationalization processes to improve the effectiveness of an alarm system within an industrial plant. Generally, many processes are involved in alarm rationalization that require an intensive amount of time and resources to execute, however alarm rationalization processes are essential for improving an alarm system. Particularly, some of the main objectives for alarm rationalization processes are to determine alarm priority, alarm set points, root causes, and corrective actions for process alarms within an alarm system. Traditional alarm rationalization processes may involve assigning a priority classification (e.g., emergency, high, medium and low) to each alarm based solely on the consequences associated with not clearing the alarm. With such approaches, traditional alarm rationalization processes typically provide atomistic, highly variable, and inaccurate outcomes that are suboptimal for improving the effectiveness of an alarm system. Accordingly, with variation and inaccuraci8es present in traditional alarm rationalization processes, the results of the processes are often misrepresentative. Misrepresentations in alarm rationalization can be devastating when tasks such as determining priority classifications for the alarms are executed. For example, misrepresentative priority classifications for the alarms may lead to a skewed alarm priority for the alarm system. In this instance, plant operators are more susceptible to misaddressing an order of activated alarms, which can lead to process upsets, plant shutdowns, and even incidents that hinder the performance and safety of industrial plants.

Therefore, there is a need for an improved framework for alarm rationalization processes, wherein such processes are optimized for configuring and managing alarms within an alarm system of an industrial plant, to improve an overall effectiveness of the alarm system.

### SUMMARY

Aspects of the present disclosure permit deploying an artificial intelligence-based alarm rationalization system for rationalizing alarm systems within an industrial plant.

One aspect of the present disclosure includes a computer-implemented method for rationalizing an alarm system within an industrial plant comprises providing, by at least one or more alarm system databases, an alarm system input comprising at least one of a training input and operational input regarding the alarm system. A predetermined alarm system philosophy for the industrial plant is provided as an input. A processor executes a machine-learned model for analyzing the alarm system input, to output a current state of the alarm system. One or more rationalizing actions for the alarm system are identified and executed based on at least one of the current state and the predetermined alarm system philosophy to output a rationalized future state of the alarm system. At least one of the rationalizing actions comprises modifying an alarm priority within the alarm system based on at least an urgency multiplier, consequence value, and severity score.

In another aspect, a computer-implemented method for rationalizing an alarm system within an industrial plant comprises providing, by an alarms system database, an alarm system input comprising at least one of an operational input and a training input for developing an alarm system within the industrial plant. A predetermined alarm system philosophy for the industrial plant is provided as an input. A processor executes a machine-learned model for identifying and performing one or more rationalizing actions based on the alarm system input and the predetermined alarm system philosophy to output a rationalized future state of the alarm system comprising one or more alarms. At least one of the one or more rationalization actions comprises creating an alarm priority of the alarm system based on a consequence value, severity score and urgency multiplier.

In another aspect, an alarm rationalization system for optimizing an alarm system within an industrial plant comprises one or more alarm system databases configured to store at least one of alarms and process data. A predetermined alarm system philosophy is configured to manage alarm system decisions within the industrial plant. A processor is configured to execute a machine-learned model. Upon execution of the machine-learned model, the processor is configured to receive as an input at least one of the alarms data and process data to analyze and provide as an output a current state of the alarm system within the industrial plant. The processor is configured to receive as input the predetermined alarm system philosophy, and upon execution of the machine-learned model, the processor is further configured to execute one or more rationalizing actions for the alarm system based on the current state and the predetermined alarm system philosophy to provide as an output, a rationalized future state of the alarm system. A controller, in communication with the processor, is configured to receive as input from the processor, alarm setting changes based on the rationalized future state, and automatically change alarm settings of alarms within the alarm system. At least one of the rationalizing actions comprises modifying an alarm priority within the alarm system based on a consequence value or severity score and an urgency multiplier.

### BRIEF DESCRIPTION OF THE DRAWINGS

FIG. 1 is an illustration of a time to clear for an alarm, according to an embodiment.
FIG. 2 is an illustration of an example for determining an alarm priority based on the time to clear, according to an embodiment.
FIG. 3 is a schematic block diagram of an alarm rationalization system within an industrial plant, according to an embodiment.
FIG. 4 is a schematic diagram illustrating a machine-learned model of the alarm rationalization system, according to an embodiment.
FIG. 5 is a schematic diagram illustrating the workflow of the alarm rationalization system, according to an embodiment.
FIG. 6 is an illustration of operational inputs for using the machine-learned model in an industrial plant, according to an embodiment.
FIG. 7A is an illustration of an example for an alarm severity score or consequence value table, according to an embodiment.
FIG. 7B is an illustration of an example for an alarm breakpoint table, according to an embodiment.
FIG. 7C is an illustration of an example for an alarm urgency assignment table, according to an embodiment.
FIG. 7D is an illustration of an example for an alarm priority table, according to an embodiment.
FIG. 8 is an illustration of an alarm rationalization process, according to an embodiment.

Corresponding reference characters indicate corresponding parts throughout the drawings.

### DETAILED DESCRIPTION

Alarm management within an industrial plant, involves determining best practices and tools to improve the effectiveness of an alarm system within the plant such that the operational performance and safety of the plant is enhanced. One aspect of alarm management involves alarm rationalization. Alarm rationalization includes a series of alarm rationalization processes to perform to improve the effectiveness of an alarm system. One rationalization process includes determining an alarm priority wherein an order for addressing activated alarms is determined. Accordingly, the alarm priority provides a strategy that enables plant operators to effectively focus their efforts in addressing the activated alarms, to clear the alarms before process upsets and hazards occur.

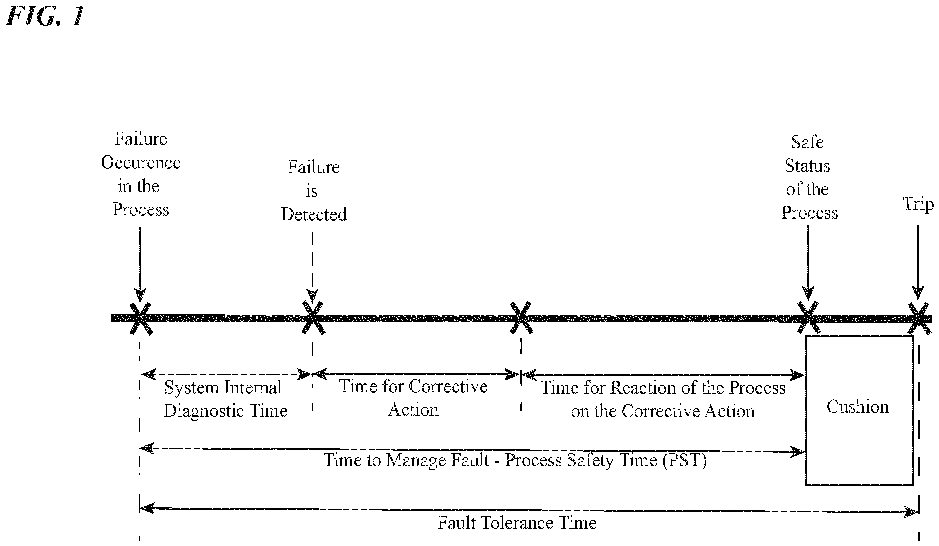

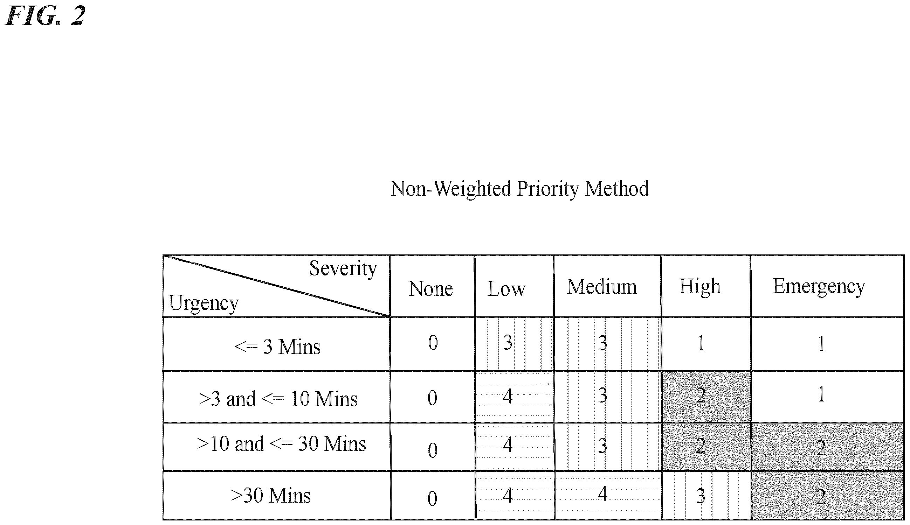

One difficulty with conventional alarm rationalization processes, is in determining an accurate alarm priority. Conventional processes for determining an alarm priority are based primarily on consequences associated with alarms not being cleared. However, a more accurate alarm priority may be obtained by taking into consideration consequences or severities of not clearing alarms within the alarm system, as well as the urgency of the alarms. The urgency can be expressed if the time required to clear an alarm, or the see, understand, decide, and act (SUDA) time is known. FIG. 1 provides an example of a breakdown of an alarm's SUDA time starting with a failure occurrence in a process of an industrial plant. From here, the alarm has an internal diagnostic time that includes the time it takes for the alarm system to detect the failure and notify plant operators regarding the detected failure. Next there is the time it takes for a corrective action to be performed within the industrial plant, and the time it takes for the process to react to the corrective action and become stabilized or activate an alarm trip. FIG. 2 provides an example of only using an estimated SUDA time to determine an alarm priority for an alarm system, without considering consequences or severities of the alarms not being cleared. Alarm rationalization systems and methods in accordance with the present disclosure consider consequences, severities and urgency to determine a more accurate alarm priority, as will be described in further detail below.

Aspects of the present disclosure improve accuracy and efficiency in determining an alarm priority for an alarm system at least in part by providing improved systems and methods for rationalizing an alarm system within an industrial plant. As will be explained in further detail below, the present disclosure provides an alarm rationalization system and methods for optimizing an alarm system within an industrial plant. Furthermore, the alarm rationalization system and methods disclosed herein are configured to continuously analyze and update an alarm priority of an alarm system, advise effective alarm settings changes to plant operators, advise required corrective actions for clearing activated alarms to plant operators, add or remove alarms within an alarm system and advise special alarms handling to plant operators.

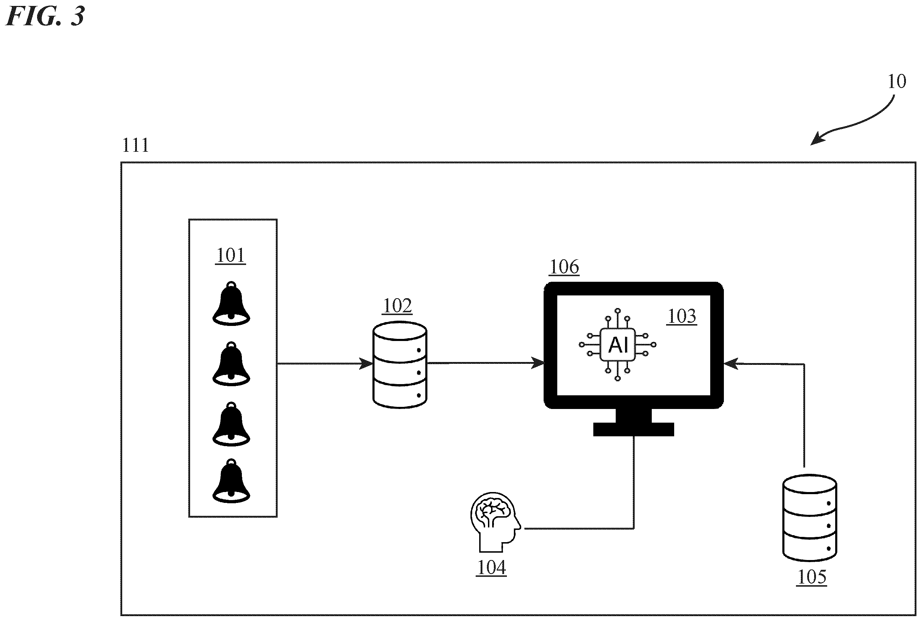

Referring now to FIG. 3, an exemplary embodiment of an alarm rationalization system in accordance with the present disclosure is generally indicated at reference number 10. The system 10 broadly comprises a plurality of alarms 101 within industrial plant 111, alarm system databases 201 comprising at least an alarms database 102 and a plant database 105, and one or more alarm system computers 106 executing processor-executable instructions from a machine-learned model 103 based at least on a predetermined alarm system philosophy 104. The alarms 101 reside within the alarms database 102, and are configured to notify plant operators regarding operating conditions within the industrial plant 111. As will be explained below, the alarm system computer 106 is operatively connected to the alarm system databases 201, and the alarm system computer is configured for executing the machine-learned model 103 for determining a rationalized future state of an alarm system within the industrial plant 111. The individual components of the alarm rationalization system 10 will now be described in greater detail before turning to exemplary methods of training the machine-learned model 103 and using the alarm rationalization system 10 within the industrial plant 111.

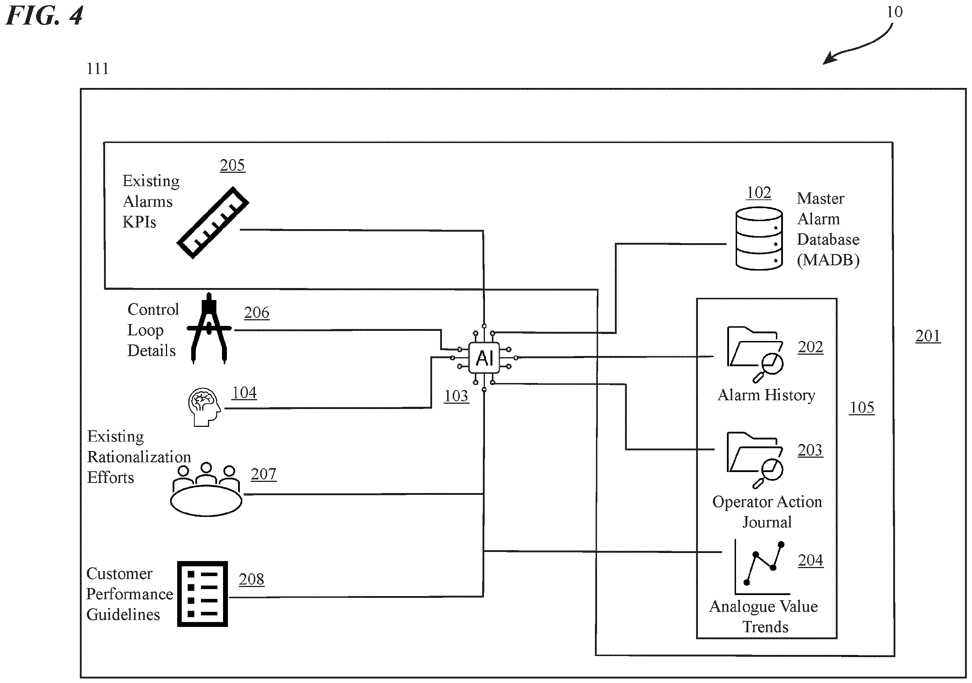

Referring now to FIG. 4, an exemplary embodiment of the alarm rationalization system 10 is shown, wherein the alarm system database 201 comprises at least the alarms database 102 and the plant database 105. The alarms database 102 is configured to store configured alarms. In the illustrated embodiment, the plant database 105 comprises a historical database, and the alarms database 102 comprises a master alarms database (hereinafter referred to as, "MADB"). The historical database 105 is configured to store historical operational data from the industrial plant 111 such as historical alarms data 202 (e.g., alarm history records), historical operator actions 203 (e.g., operator action journal data), and historical process data 204 (e.g., analog value trends). The MADB 102 is configured to store configured alarms data such as a list of alarms, alarm groups, alarm types, alarm priority, alarm classes, alarm activation points, corrective actions, and consequences of alarm activations. In an exemplary embodiment, the alarm system databases 201 are further configured to store data pertaining to existing alarm key performance indicators 205, control loop details 206, existing alarm rationalization efforts 207, and customer performance guidelines 208.

In an exemplary embodiment, the alarm system databases 201 are further configured to store the predetermined alarm system philosophy 104 for the industrial plant 111. The alarm system philosophy 104 comprises detailed guidelines for the alarm system and alarm rationalization. For example, the alarm system philosophy 104 comprises a list of rationalization rules that align with performance goals such as KPI's for the industrial plant 111, and are derived from plant management and alarm system standards such as ISA 18.2. The alarm system philosophy 104 is configured to define an alarm rationalization approach for managing alarm system decisions and executing rationalization actions within the industrial plant 111. For example, the alarm system philosophy 104 includes Management of Change procedures (hereinafter referred to as "MOC") for executing rationalizing actions identified by the machine-learned model 103, within the industrial plant 111.

In one embodiment, the alarm system philosophy 104 comprises an alarm severity score or consequence value table 301, an alarm breakpoint table 302, and an alarm urgency assignment table 303. The alarm severity score table 301 includes consequences or severity impacts such as safety, environmental and economic impacts, severity classifications for the severity impacts such as none, low, medium, high and emergency, and severity scores for each severity impact and severity classification combination. The alarm breakpoint table 302 comprises priority classifications such as emergency, high, medium, low and not an alarm. Furthermore, the alarm breakpoint table 302 comprises breakpoint value thresholds for each priority classification. The alarm urgency assignment table 303 includes a plurality of time thresholds that define available times for clearing an alarm, urgency classifications such as emergency, high, medium and low associated with each of the time thresholds, and urgency multipliers associated with each of the urgency classifications.

In general, the alarm system computer 106 is configured to execute the machine-learned model 103 to rationalize the alarm system within the industrial plant 111 based on data obtained from the alarm system databases 201. The alarm system computer 106 includes a processor, a memory, user inputs, a display and other related elements. The alarm system computer 106 may also include circuit boards and/or other electronic components such as a transceiver or external connection for communicating with other computing devices of the system 10. For example, the alarm system computer 106 includes components such as wireless transceivers and/or wired connectors that connect the alarm system computer to the alarms system databases 201. Accordingly, memory of the alarm system computer 106 stores process-executable instructions such as the machine-learned model 103 and the processor is configured to execute the instructions in order to generate the rationalized future state of the alarm system within the industrial plant 111. In one embodiment, the processor is configured to populate at least one of the alarm system databases 201 with data regarding the rationalized future state. A plant operator may view the rationalized future state data via the display. In an exemplary embodiment, the alarm rationalization system 10 further comprises one or more controllers that are operatively connected to the alarm system computer 106, and the controllers are configured to automatically execute actions within the industrial plant 111. For example, the controllers are configured to receive inputs from the alarm system computer 106 such as alarm settings changes derived from the rationalized future state data and automatically change settings of alarms 101 within the industrial plant 111 based on the inputs.

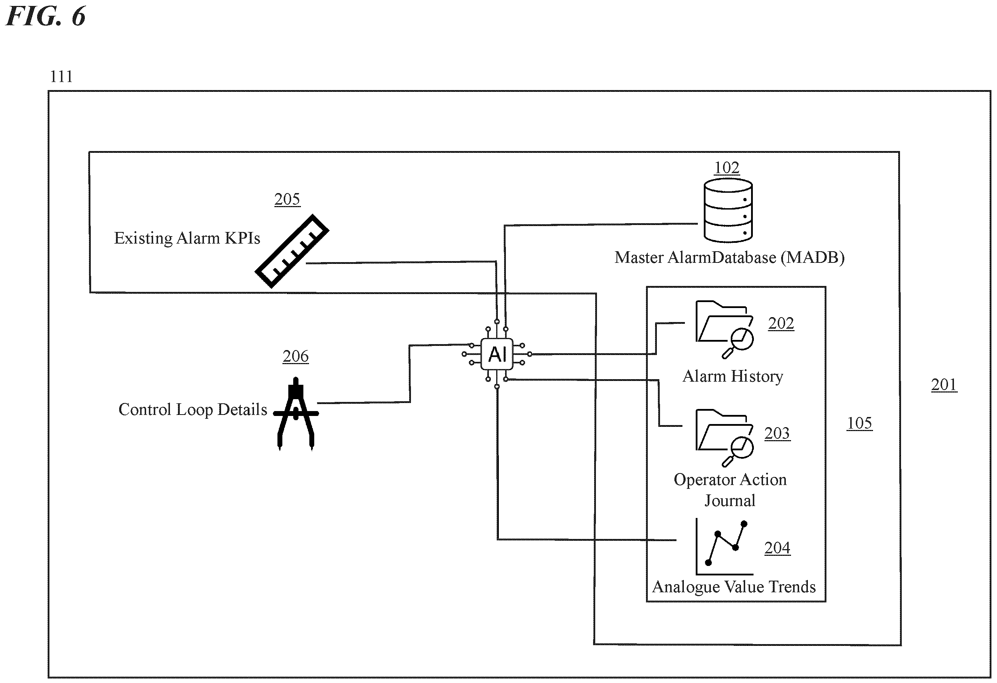

The machine-learned model 103 is configured to obtain the data from the alarm system databases 201 as alarm system input comprising at least one of operational inputs and training inputs to determine or output a current state of the alarm system within the industrial plant 111. FIG. 4 provides an example of data used as training inputs for training the machine-learned model 103, whereas FIG. 6 provides an example of data used as operational inputs for utilizing the machine-learned model in operations. Furthermore, the machine-learned model 103 is configured to analyze the operational inputs, training inputs and a determined current state of the industrial plant 111. For example, the machine-learned model 103 is configured to perform at least one of estimating an average rate of change on disturbance, evaluate alarms performance, identify active alarms priority distribution and identify a configured priority distribution based at least on a predefined or target distribution 304.

The machine-learned model 103 is further configured to identify and execute one or more rationalizing actions for the alarm system based at least on the current state and the alarm system philosophy 104 to determine a rationalized future state of the alarm system. In an exemplary embodiment, the machine-learned model 103 is further configured to evaluate a management of change evaluation for each rationalizing action, to determine which rationalizing action to evaluate based on the MOC procedures. In one example, the rationalizing actions comprise modifying an alarm priority, disabling an alarm, enabling an alarm, modifying an alarm logic, verifying an alarm logic, and performing no change with individual alarms within the alarm system.

The machine-learned model 103 is configured to modify an alarm priority of the alarm system by weighting a reaction time, which includes the time available to clear an alarm, with other factors that impact an alarm priority such as alarm severities, alarm consequences and alarm urgencies to determine the alarm priority for the alarm system. Accordingly, embodiments in accordance with the present disclosure provide a more holistic and accurate alarm priority for an alarm system than conventional processes for determining an alarm priority, as more factors that impact the alarm priority are considered.

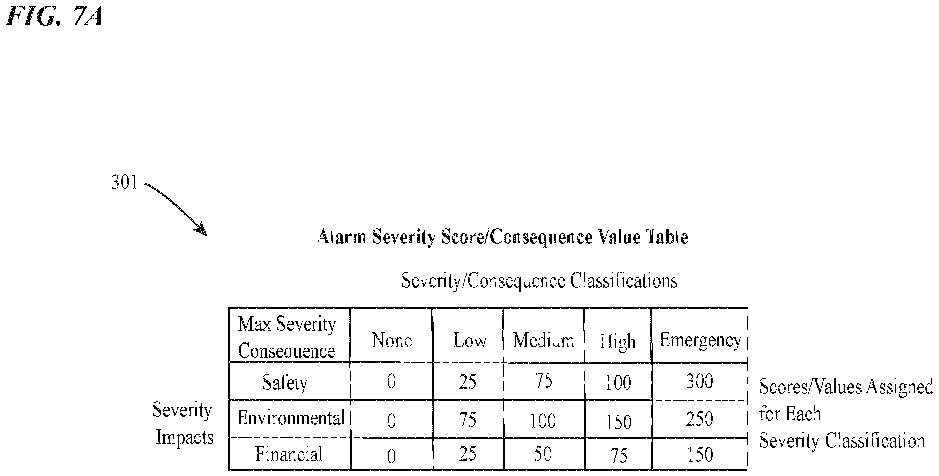

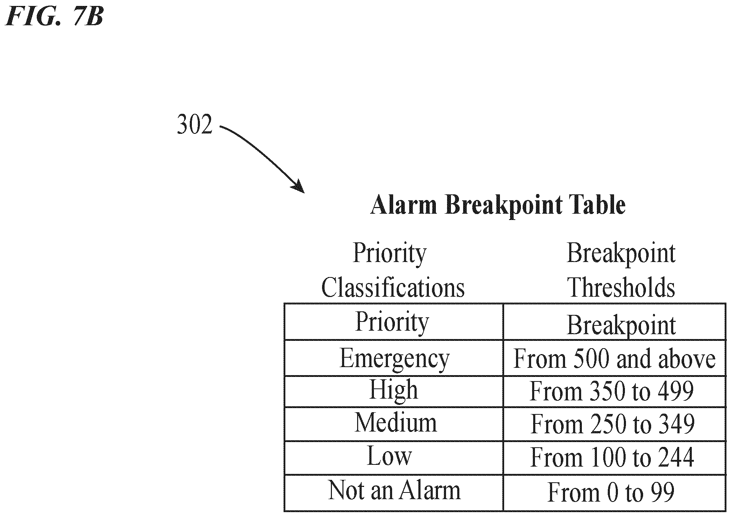

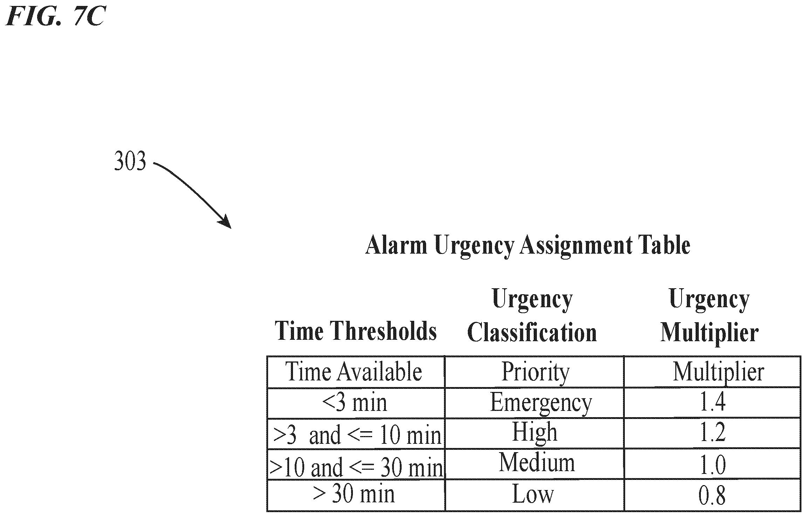

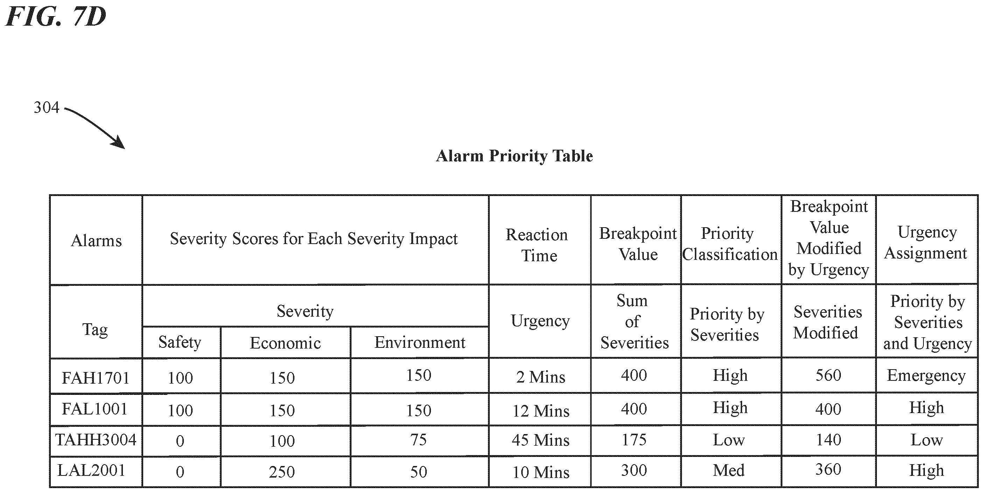

FIGS. 7A-7D provide an example of modifying an alarm priority based on a least a consequence value or severity score and an urgency multiplier. Each alarm 101 within the alarm system comprises a unique identification tag. Each alarm 101 is assigned a severity score or consequence value for each severity impact determined from the alarm severity score table 301. In one embodiment, the severity scores for each alarm are summed to determine a breakpoint value for each alarm. Moreover, each alarm has a reaction time. The reaction time for each alarm is compared to the plurality of time thresholds from the alarm urgency assignment table 303 to determine an urgency multiplier. The breakpoint value is multiplied by the urgency multiplier to obtain a modified breakpoint value that considers urgency. The modified breakpoint value is compared to the breakpoint thresholds of the alarm breakpoint table 302 to determine a priority classification for the alarm 101. The priority classifications for each alarm 101 within the alarm system, are used to determine the alarm priority for the rationalized future state. The machine-learned model 103 is configured to populate the MADB 102 with data regarding the alarm priority for the rationalized future state.

In one embodiment, the enabling and disabling an alarm rationalizing actions, are based on protocol outlined by the MOC procedures. The machine-learned model 103, will assign the enabling alarm action if a disabled alarm belongs to a category of enabled alarms. In the case that the current state is analyzed and determined to not have an adequate amount of alarms, the enabling alarm rationalizing action is performed to add an alarm to the alarm system based on the MOC procedures. On the contrary, when the current state is analyzed and determined to have alarms that serve no useful purpose, the disabling alarm rationalizing action is performed to remove the alarms from the alarm system based on the MOC procedures.

The machine-learned model 103 is configured to add and/or modify an advanced alarm logic of the alarm system by associating correlated alarms and events activated within the same timeframe. Accordingly, embodiments in accordance with the present disclosure provide a more holistic and accurate alarm activation for an alarm within the alarm system than conventional processes used for determining when an alarm should be activated. As an example, the machine-learned model 103 is configured to monitor activated alarm history 202 and operator action journals 203 to identify that an alarm is always activated if one unit is down. The machine-learned model 103 will suggest suppressing the alarm as long as the unit is down.

Moreover, the machine learned model 103 is configured to verify an advanced alarm logic of the alarm system by associating correlated alarms and events activated within the same timeframe. Accordingly, embodiments in accordance with the present disclosure provide a more holistic and accurate alarm activation for an alarm within the alarm system than conventional processes used for determining when an alarm should be activated. As an example, the machine-learned model 103 is configured to monitor activated alarm history 202 and operator action journals 203 to identify that an alarm is always activated if one unit is down. The machine-learned model 103 will verify alarm suppression logic and ensure no essential or critical alarms are missed due to the suppression.

In an exemplary embodiment, the machine-learned model 103 is further configured to determine a rationalizing effect of executing said rationalizing actions. In one example, the current state is compared to the rationalized future state to determine the rationalizing effect, wherein the rationalizing effect defines a delta between the current state and rationalized future state. In another example, the rationalized future state is compared to a target state, provided as an input, to determine a rationalizing effect of the executed rationalizing actions, wherein the rationalizing effect indicates a delta between the rationalized future state and the target state. For example, the target state may comprise a target distribution of alarm priorities based on ISA 18.2 alarm system standards. The machine-learned model 103 is configured to evaluate a distribution of alarm priorities of the rationalized future state, and compare the distribution to the predefined or target distribution 304 to determine the rationalizing effect of modifying the alarm priority of an alarm system.

The machine-learned model 103 is further configured to determine whether to re-execute rationalizing actions or to propose the rationalized future state based on the rationalizing effect. In one example, the machine-learned model 103 determines to propose the rationalized future state if the rationalizing effect meets or exceeds a desired rationalizing effect and the machine-learned model determines to re-execute rationalizing actions if the rationalizing effect does not meet or exceed the desired rationalizing effect. In re-executing rationalizing actions, the machine-learned model 103 is configured to perform rationalizing actions that have not yet been performed, perform modifications of rationalizing actions that have been performed, and perform at least one of the same rationalizing actions. In one example, the machine-learned model 103 is configured to define urgency classifications for a plurality of time thresholds and define an urgency multiplier for each of the urgency classifications to reconstruct the alarm urgency assignment table 303. In another example, the machine-learned model 103 is configured to define severity classifications for a plurality of severity impacts and define severity scores for each of the severity impacts to reconstruct the alarm severity score table 301. Moreover, the machine-learned model 103 is configured to define priority classifications for a plurality of breakpoint thresholds to reconstruct the alarm break point table 302.

The machine-learned model 103 is further configured to generate corrective actions for clearing activated alarms within the alarm system based on the rationalized future state, and communicate the corrective actions to plant operators via the display. Moreover, the machine-learned model 103 is configured to generate alarm settings for the alarms 101 within the alarm system based on the rationalized future state and communicate the alarm settings to plant operators via the display. Additionally, in both of these cases, the machine-learned model 103 may populate the MADB 102 with the generated corrective actions and generated alarm settings.

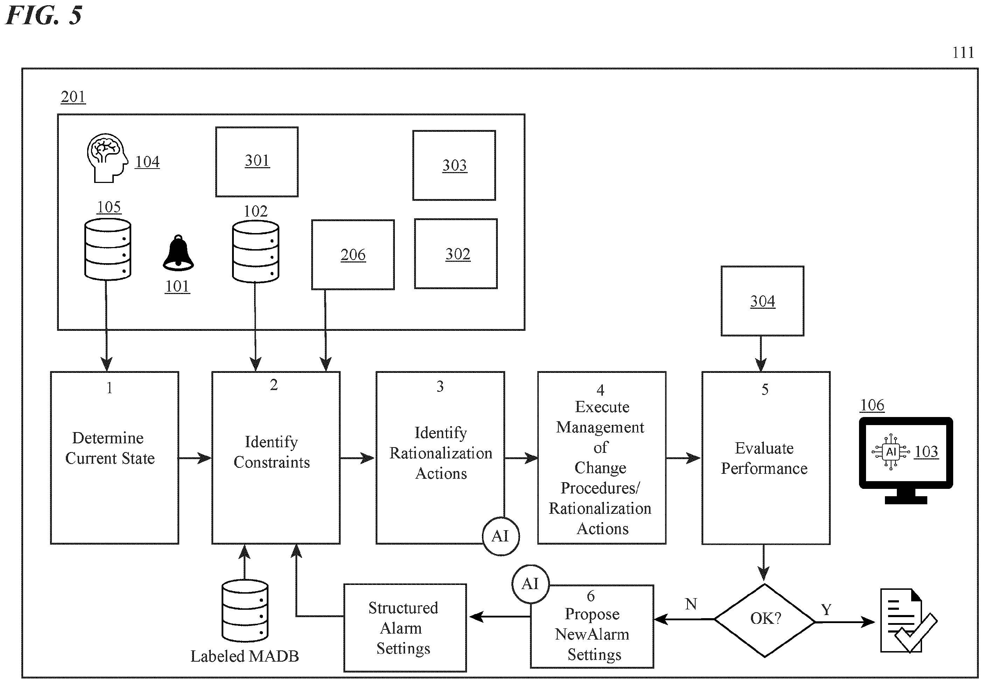

Referring now to FIG. 5, an exemplary embodiment of a cyclical workflow of the alarm rationalization system 10 within the industrial plant 111 is shown. Particularly, the workflow includes steps defined by the machine-learned model 103, for the alarm system computer 106 to execute. At step 1, the current state is determined based on input from the alarm system database 201. For example, input regarding historical data such as alarms and process data, is received from the plant database 105. An average rate of change on disturbance is determined for alarm variables. The current performance of the alarms is evaluated, and the active alarms priority distribution is identified. In one example, alarms performance is found by multiplying the alarms frequency (top 10) by duplicate alarms (alarms occurring at the same time), and dividing by consecutive alarms, chattering alarms, and the alarms priority distribution.

At step 2, constraints are identified. For example, alarm system input such as data from the alarms database 102 and control loop details 206 is used to identify a configured priority distribution, establish a priority of alarms based on consequences modified by reaction time, and identify rationalization actions based on alarms categorization.

At step 3, rationalization actions such as disabling an alarm, enabling an alarm, modifying an alarm priority, modifying and alarm group, modifying alarm logic (e.g., to exclude a distributed control system), verifying alarm logic (e.g., verifying the emergency shutdown (ESD) logic for open/close), rationalizing alarm thresholds, and performing no change are identified based on alarm system input.

At step 4, the rationalizing actions and management of change procedures are executed.

At step 5, alarms performance is reevaluated. For example, the priority distribution is compared with the target distribution 304, and operation feedback is considered in reevaluating the alarms performance. The performance is determined to be sufficient or insufficient.

At step 6, if the performance is insufficient, then new alarm settings are proposed and inputted back into the workflow cycle along with data from a labeled Master Alarms Database (MADB). In an exemplary embodiment, the alarm settings are restructured in a comprehensible format.

Computer-implemented methods for training and using the machine-learned model 103 in the industrial plant 111 will now be described. In the first described method below, the machine-learned model 103 is trained to take a start-from-existing approach to rationalize an alarm system with preexisting alarms. In the method described second, the machine-learned model 103 is trained to take a start-from-zero approach to develop a rationalized alarm system.

Initially in the start-from-existing approach, an alarm system input comprising at least one of a training input and operational input, and a predetermined alarm system philosophy, from at least one of the alarms system databases 201 is provided as input to the alarm system computer 106. The processor executes the machine-learned model 103, and the machine-learned model obtains the alarm system input for the alarm system within the industrial plant 111. Next the machine-learned model 103 analyzes the alarm system input to analyze and provide as an output, a current state of the alarm system within the industrial plant 111. For example, this may include at least one of evaluating the performance of the current state of the alarm system, estimating an average rate of change on alarm disturbance, identifying active alarms priority distribution, and identifying a configured priority distribution.

Next, the machine-learned model 103 identifies one or more rationalizing actions for the alarm system based at least on one of the alarm system input, the current state, alarm key performance indicators, and the alarm system philosophy 104, to execute to obtain a rationalized future state of the alarm system. Suitably, the machine-learned model 103 executes the management of change procedures and rationalizing actions. For example, the machine-learned model 103 modifies an alarm priority of the alarm system based on at least a consequence value or a severity score and an urgency. From here, the machine-learned model 103 compares the rationalized future state to a target state to determine the rationalizing effect of executing said one or more rationalizing actions. At this point the machine-learned model 103 determines whether to re-execute the method or to propose the rationalized future state based on the rationalizing effect. In one example, the machine-learned model 103 determines to propose the rationalized future state if the rationalizing effect meets or exceeds a desired rationalizing effect and the machine-learned model determines to re-execute the method if the rationalizing effect does not meet or exceed the desired rationalizing effect.

In the case that the machine-learned model 103 determines to re-execute the method, the machine-learned model 103 obtains further alarm system inputs to determine a current state and perform further rationalizing actions based at least on the alarm system inputs, current state and alarm system philosophy 104. Furthermore, the machine-learned model 103 identifies rationalizing actions that were not previously executed. For example, the machine-learned model 103 is configured to modify alarm setting values such as the consequence values, the urgency multipliers and the time thresholds when performing further rationalizing actions. In one exemplary embodiment, the machine-learned model 103 repeats this process until the desired rationalizing effect, which may include plant KPI's, is met or exceeded. In the case that the machine-learned model 103 determines to propose the rationalized future state, the machine-learned model generates alarm settings and corrective actions for clearing activated alarms within the industrial plant 111 based on the rationalized future state. The machine-learned model 103 populates the MADB 102 with data regarding the rationalized future state. The rationalized future state is proposed to plant operators via the display of the alarm system computer 106.

In the start from zero approach, the method similarly begins with at least one of the alarm system input and a predetermined alarm system philosophy, from at least one of the alarms system databases 201 being provided as input to the alarm system computer 106. The processor executes the machine-learned model 103, and the machine-learned model 103 obtains the alarm system input from the alarm system databases 201 for developing an alarm system comprising a plurality of alarms. Next, the machine-learned model 103 identifies and performs one or more rationalizing actions based on at least one of the alarm system input, and the alarm system philosophy 104 for the industrial plant 111 to determine a rationalized future state of the alarm system. The rationalizing actions include at least one of creating an alarm priority of the alarm system based on at least a consequence value and an urgency multiplier, enabling an alarm, developing an alarm group, developing an alarm logic, developing alarm thresholds, and verifying the alarm logic. Next, in an exemplary embodiment, the machine-learned model 103 compares the rationalized future to a target state to determine a rationalizing effect of executing said one or more rationalizing actions. Further, the machine-learned model 103 determines whether to re-execute the method based on the rationalizing effect. Once a desired rationalizing effect is maintained, the machine-learned model 103 generates alarm settings and corrective actions based on the rationalized future state. The rationalized future state, alarm setting and corrective actions are proposed to plant operators via the display of the alarm system computer 106.

In exemplary embodiments, an additional step of evaluating a performance evaluation based on at least one of customer and operator feedback is involved in both the start-from-existing approach and the start-from-zero approach for training the machine-learned model 103 for use in an industrial plant. Moreover, the machine-learned model 103 in both instances is retrained based on the performance evaluation.

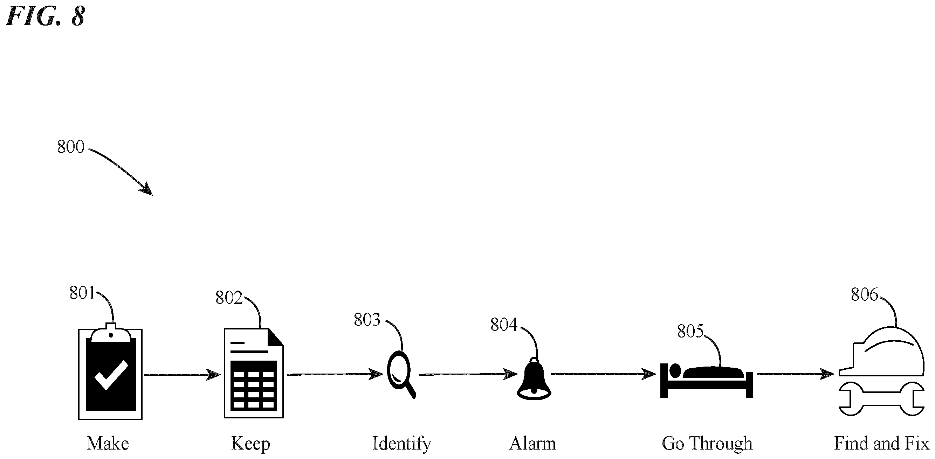

Referring now to FIG. 8, an alarm management process is generally indicated at reference number 800. At step 801, one master list of alarms is made and exported from an alarm system. In the next steps, the list is red-tagged. Step 802 requires that all required alarms such as regulatory, hazard and operability (HAZOP), incident, procedures, and training alarms are kept. At step 803, common repeating elements from the alarms list are identified, and at step 804 alarmed. At step 805, the rest of the alarms from the alarms list are analyzed, and at 806, loose ends from the list are found and fixed.

The deployment of an AI-based alarm rationalization system 10 in process control systems embodying aspects of the present disclosure advances more sustainable plant operations through efficiently utilizing and maintaining plant resources. The AI-based alarm rationalization system 10 provides continuous alarm rationalization over the entire lifetime of a plant, reduces alarm rationalization time and costs, and provides more process insights that were not previously available which provides a more predictive alarm management system.

Having described the invention in detail, it will be apparent that modifications and variations are possible without departing from the scope of the invention defined in the appended claims.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may be described as artificial intelligence model to analyze process alarms and generate corresponding rationalization actions.

Accordingly, the present invention may be described as follows, optionally in combination with one or more of the above-mentioned features of the present invention: rationalizing an alarm system within an industrial plant, includes an alarm system computer in communication with one or more alarm system databases. The alarm system computer is configured to execute a machine-learned model to analyze at least one of alarms data and process data received from the alarm system databases, to output, a current state of the alarm system within the industrial plant. A predetermined alarm system philosophy for the plant is provided as input, and the machine-learned model identifies and executes one or more rationalizing actions for the alarm system based at least on the current state and the predetermined alarm system philosophy to output a rationalized future state of the alarm system. At least one of the one or more rationalizing actions comprises modifying an alarm priority within the alarm system based at least on an urgency multiplier and a severity score or consequence value.

## Claims

1. Computer-implemented method for rationalizing an alarm system within an industrial plant, the method comprising:
providing, by at least one or more alarm system databases, an alarm system input comprising at least one of a training input and an operational input regarding the alarm system;
providing, as an input, a predetermined alarm system philosophy for the industrial plant;
executing, by a processor, a machine-learned model for:
analyzing the alarm system input, to output a current state of the alarm system;
identifying and executing one or more rationalizing actions for the alarm system based on at least one of the current state and the predetermined alarm system philosophy to output a rationalized future state of the alarm system; and
wherein at least one of the rationalizing actions comprises modifying an alarm priority within the alarm system based on at least an urgency multiplier, consequence value, and severity score.

2. Computer-implemented method as set forth in claim 1, wherein the alarm system input comprises at least one of existing alarm key performance indicators, existing alarm rationalization efforts, customer performance guidelines, analog value trends, master alarms database data, alarm history records data, operator action journals data, and control loop details.

3. Computer-implemented method as set forth in any one of claims 1-2, wherein said executing one or more rationalizing actions further comprises at least one of disabling an alarm, enabling an alarm, modifying an alarm group, modifying an alarm logic, verifying an alarm logic, and performing no change.

4. Computer-implemented method as set forth in any one of claims 1-3, further comprising:
receiving, as an input, a target state;
upon execution of the machine-learned model, comparing the rationalized future state of the alarm system to at least one of the current state and the target state to output a rationalizing effect of executing said one or more rationalizing actions; and
upon execution of the machine-learned model, outputting a determination regarding whether to re-execute the method, based on the rationalizing effect.

5. Computer-implemented method as set forth in any one of claims 1-4, further comprising, upon execution of the machine-learned model, outputting alarm settings based on the rationalized future state of the alarm system, and further comprising, upon execution of the machine-learned model, outputting corrective actions for clearing activated alarms within the alarm system based on the rationalized future state.

6. Computer-implemented method as set forth in any one of claims 1-5, further comprising, upon execution of the machine-learned model, outputting urgency classifications for a plurality of time thresholds, and outputting an urgency multiplier for each of the urgency classifications.

7. Computer-implemented method as set forth in any one of claims 1-6, further comprising, upon execution of the machine-learned model, outputting severity classifications for a plurality of severity impacts, and outputting severity scores for each of the severity impacts, and further comprising, upon execution of the machine-learned model, outputting priority classifications for a plurality of breakpoint thresholds.

8. Computer-implemented method as set forth in any one of claims 1-7, further comprising:
receiving, as an input, customer and operator feedback;
upon execution of the machine-learned model, outputting a performance evaluation of the alarm system based on at least one of the customer and operator feedback; and
retraining the machine-learned model based on the performance evaluation.

9. Computer-implemented method for rationalizing an alarm system within an industrial plant, the method comprising:
providing, by an alarms system database, an alarm system input comprising at least one of an operational input and a training input for developing an alarm system within the industrial plant;
providing, as an input, a predetermined alarm system philosophy for the industrial plant;
executing, by a processor, a machine-learned model for:
identifying and performing one or more rationalizing actions based on the alarm system input and the predetermined alarm system philosophy to output a rationalized future state of the alarm system comprising one or more alarms;
wherein at least one of the one or more rationalization actions comprises creating an alarm priority of the alarm system based on a consequence value, severity score and urgency multiplier.

10. Computer-implemented method as set forth in claim 9, wherein said performing one or more rationalizing actions further comprises at least one of enabling an alarm, developing an alarm group, developing an alarm logic, verifying the alarm logic, and developing alarm thresholds.

11. Computer-implemented method as set forth in any one of claims 9-10, further comprising, upon execution of the machine-learned model, outputting alarm settings for the one or more alarms based on the rationalized future state of the alarm system.

12. Computer-implemented method as set forth in any one of claims 9-11, further comprising, upon execution of the machine-learned model, outputting corrective actions for the one or more alarms when they are activated within the alarm system based on the rationalized future state.

13. Computer-implemented method as set forth in any one of claims 9-12, further comprising:
receiving, as an input, a target state;
upon execution of the machine-learned model, comparing the rationalized future state of the alarm system to the target state to output a rationalizing effect of performing said one or more rationalizing actions; and
upon execution of the machine-learned model, outputting a determination regarding whether to re-execute the method based on the rationalizing effect.

14. Alarm rationalization system for optimizing an alarm system within an industrial plant, the system comprising:
one or more alarm system databases configured to store at least one of alarms and process data;
a predetermined alarm system philosophy configured to manage alarm system decisions within the industrial plant;
a processor configured to execute a machine-learned model, wherein upon execution of the machine-learned model, the processor is configured to receive as an input at least one of the alarms data and process data to analyze and provide as an output a current state of the alarm system within the industrial plant, the processor configured to receive as input the predetermined alarm system philosophy, and upon execution of the machine-learned model, the processor is further configured to execute one or more rationalizing actions for the alarm system based on the current state and the predetermined alarm system philosophy to provide as an output, a rationalized future state of the alarm system; and
wherein at least one of the rationalizing actions comprises modifying an alarm priority within the alarm system based on a consequence value or severity score and an urgency multiplier.

15. Alarm rationalization system as set forth in claim 14, further comprising a controller operably connected to the processor, the controller being configured to receive as input from the processor, alarm settings changes based on the rationalized future state, and automatically change alarm settings of alarms within the alarm system.
